# EUROPEAN PATENT APPLICATION

(11) **EP 4 730 753 A1**
(43) Date of publication of application: **22.04.2026**
(21) Application number: 24844386.3
(22) Date of filing: 31.05.2024
(51) Int. Cl.: H04M 1/02, G06F 1/16

(54) **FOLDING ELECTRONIC APPARATUS**

(30) Priority: 27.07.2023 CN 202310936589
(71) Applicant: Huawei Technologies Co., Ltd., Shenzhen, Guangdong 518129 (CN)
(72) Inventor: YU, Xiaochun, Shenzhen, Guangdong 518129 (CN); YUAN, Ling, Shenzhen, Guangdong 518129 (CN); ZHU, Delong, Shenzhen, Guangdong 518129 (CN); TENG, Gengchen, Shenzhen, Guangdong 518129 (CN)
(74) Representative: Goddar, Heinz J.
(86) International application number: PCT/CN2024/096538
(87) International publication number: WO 2025/020691

(57) **Abstract**

This application relates to a foldable electronic device including a first middle frame, a second middle frame, an electronic component, and a magnet assembly. The second middle frame is rotatably connected to the first middle frame, the electronic component is disposed on the first middle frame or the second middle frame, the first middle frame and the second middle frame are magnetically attached to each other via the magnet assembly, the magnet assembly includes a first magnet, and the first magnet is disposed on the electronic component, so that there is only a distance of a gap between the first magnet and the electronic component, reducing space occupied by the first magnet and the electronic component in a first direction and a second direction in the foldable electronic device, and improving utilization of space inside the foldable electronic device, for the first magnet or the electronic component to have more mounting space in the first direction and the second direction. In this way, a volume of the first magnet or the electronic component can be designed to be larger, to improve performance of the first magnet or the electronic component, improving user experience.

## Description

This application claims priority to Chinese Patent Application No. 202310936589.5, field with the China National Intellectual Property Administration on July 27, 2023 and entitled "FOLDABLE ELECTRONIC DEVICE", which is incorporated herein by reference in its entirety.

### TECHNICAL FIELD

This application relates to the field of terminal technologies, and in particular, to a foldable electronic device.

### BACKGROUND

With the continuous development of electronic technologies, terminal devices such as mobile phones, notebook computers, and tablet computers have become increasingly integrated into people's life, and people are also increasingly accustomed to watching videos, checking current events, and enjoying movies, sports events, and the like on mobile phones and other terminal products. To obtain a larger display screen to improve viewing experience of users, foldable electronic devices gradually become popular.

Currently, a foldable electronic device usually includes two middle frames rotatable relative to each other, for the foldable electronic device to have a folded state and an unfolded state. When the foldable electronic device is folded, a specific force is required to maintain the folded state and a mechanical feel during folding. Usually, magnets are mounted on the two middle frames, so that the two middle frames can attract each other via the magnets to ensure a secure connection and a mechanical feel of the foldable electronic device in the folded state. However, the magnet usually has a large volume, and there are other electronic components further mounted on the middle frame. There is a specific distance between another electronic component and the magnet mounted on the middle frame, where the distance includes a wall thickness of the middle frame, a fit clearance, and the like, affecting the arrangement of components in the foldable electronic device, and reducing utilization of space inside the foldable electronic device.

### SUMMARY

This application provides a foldable electronic device, to resolve the foregoing problem that mounting a magnet on a middle frame reduces utilization of space inside a foldable electronic device.

An embodiment of this application provides a foldable electronic device including a first middle frame, a second middle frame, an electronic component, and a magnet assembly. The second middle frame is rotatably connected to the first middle frame, the electronic component is disposed on the first middle frame or the second middle frame, the first middle frame and the second middle frame are magnetically attached to each other via the magnet assembly, the magnet assembly includes a first magnet, and the first magnet is disposed on the electronic component.

In this application, the first magnet is disposed on the electronic component. In space inside the foldable electronic device, there is only a distance n of a gap between the first magnet and the electronic component, so that a thickness of the first middle frame at a spaced part between the first magnet and the electronic component can be omitted, and a distance of a gap between the electronic component and the first middle frame at the spaced part and a distance of a gap between the first magnet and the first middle frame at the spaced part can be further omitted, reducing space occupied by the first magnet and the electronic component in a first direction and a second direction in the foldable electronic device, and improving utilization of space inside the foldable electronic device, for the first magnet or the electronic component to have more mounting space in the first direction and the second direction. In this way, a volume of the first magnet or the electronic component can be designed to be larger, to improve performance of the first magnet or the electronic component, improving user experience.

In a possible design, the electronic component is provided with a recess, and the first magnet is disposed in the recess, so that space for stacking the electronic component and the first magnet in a third direction can be reduced, and a thickness of the foldable electronic device in the third direction can be reduced, facilitating a light and thin design of the foldable electronic device in the third direction. In addition, the recess can limit the magnet in the first direction and the second direction, and prevent the first magnet from moving in this plane, improving effect of fastening the first magnet in the recess, and improving structural stability of the foldable electronic device.

In a possible design, the recess includes a side wall, and an adhesive accommodating groove is recessed into the side wall. By dispensing an adhesive in the adhesive accommodating groove, the first magnet located in the recess can be bonded to the side wall of the recess, improving tolerance for errors of the first magnet in the recess, so that a first magnet of a small volume can still be securely fastened in the recess, further improving effect of fastening the first magnet in the recess, so that first magnets of different sizes can be stably located in the first recess, further improving structural stability of the foldable electronic device.

In a possible design, a depth of the adhesive accommodating groove is d, and 0.14 mm ≤ d ≤ 0.16 mm. When the depth d of the adhesive accommodating groove meets 0.14 mm ≤ d ≤ 0.16 mm, the adhesive accommodating groove has a moderate depth, and can accommodate a sufficient volume of adhesive, so that the first magnet can be securely connected to the side wall of the recess without detachment, improving effect of fastening the first magnet in the recess, and improving structural stability of the foldable electronic device. In addition, it is easy to process the adhesive accommodating groove with this depth, with a low process requirement and no waste of an adhesive material, so that the adhesive accommodating groove can be easily filled up with the dispensed adhesive, reducing manufacturing costs.

In a possible design, in a third direction of the foldable electronic device, a height of the adhesive accommodating groove is h1, and 0.6 mm ≤ h1 ≤ 0.8 mm. When the height h1 of the adhesive accommodating groove meets 0.6 mm ≤ h1 ≤ 0.8 mm, it can be ensured that the adhesive accommodating groove has a moderate volume, and can accommodate a sufficient volume of adhesive, thereby ensuring effect of bonding between the first magnet and the side wall of the recess, so that the first magnet hardly detaches from the recess, improving structural stability of the foldable electronic device. It is also easy to process the adhesive accommodating groove with this depth, with a low process requirement and no adhesive overflowing, saving a material, and reducing manufacturing costs.

In a possible design, the recess further includes a bottom wall, and there is a gap between the bottom wall and the first magnet. By dispensing an adhesive in the gap, the first magnet located in the recess can be bonded to the bottom wall of the recess, further improving effect of fastening the first magnet in the recess, and further improving structural stability of the foldable electronic device.

In a possible design, in a third direction of the foldable electronic device, a distance of the gap is L, and 0.1 mm ≤ L ≤ 0.15 mm. When the distance L of the gap meets 0.1 mm ≤ L ≤ 0.15 mm, there is an adhesive layer with a moderate thickness between the first magnet and the bottom wall of the recess, so that bonding strength between the first magnet and the bottom wall can be improved, and effect of bonding the first magnet into the recess can be improved. In this way, the first magnet hardly detaches from the recess, improving structural stability of the foldable electronic device, meeting a requirement for a lighter and thinner design of the foldable electronic device, and resulting in low costs.

In a possible design, a protrusion is provided in the recess; and in a third direction of the foldable electronic device, the protrusion protrudes from the bottom wall, so that movement of the first magnet can be limited in the third direction, thereby ensuring that there is a sufficient gap between the first magnet and the lowest point of the bottom wall in the third direction, and then ensuring a sufficient thickness of an adhesive layer, to ensure bonding strength between the first magnet and the bottom wall, improving effect of fastening the first magnet in the recess.

In a possible design, the protrusion protrudes at a corner of the bottom wall. In this way, it can be ensured that there is a sufficient distance L of a gap between the first magnet and a middle part of the bottom wall in the third direction, ensuring a thickness of an adhesive layer, increasing a bonding area between the first magnet and the bottom wall, further improving bonding strength between the first magnet and the bottom wall, and further improving effect of fastening the first magnet in the recess.

In a possible design, in the third direction of the foldable electronic device, a height of the protrusion is h2, and 0.05 mm ≤ h2 ≤ 0.08 mm. When the height h2 of the protrusion meets 0.05 mm ≤ h2 ≤ 0.08 mm, it can be ensured that the distance L of the gap between the first magnet and the bottom wall is sufficient, thereby ensuring a sufficient thickness of an adhesive layer, to ensure bonding strength between the first magnet and the bottom wall and improve effect of fastening the first magnet in the recess, with no waste of an applied adhesive. This is also conducive to a requirement for a lighter and thinner design of the entire foldable electronic device.

In a possible design, the electronic component is an audio assembly, the audio assembly includes an upper cover, a core, and a lower cover, the core and the upper cover enclose a front cavity, the core, the lower cover, and the upper cover enclose a rear cavity, and at least a part of the upper cover is recessed toward the rear cavity to form the recess.

In this solution, at least a part of the upper cover is recessed toward the rear cavity to form the recess, so that a thickness of the foldable electronic device in the third direction can be reduced, facilitating a light and thin design of the foldable electronic device in the third direction. In addition, if an original volume of the first magnet remains unchanged, and a volume of the electronic component is designed to be larger, the electronic component used as the audio assembly can have a larger rear cavity, so that bass effect of the electronic component can be improved, and audio performance of the foldable electronic device can be improved, improving user experience.

In a possible design, the lower cover is provided with an avoidance groove, and at least a part that is of the upper cover and that is recessed toward the rear cavity is located in the avoidance groove, so that a depth of the recess in the third direction can be ensured, to improve limiting effect of the recess on the first magnet inside the recess, and space for stacking the first magnet, the upper cover, and the lower cover in the third direction can be further reduced, and therefore a thickness of the foldable electronic device in the third direction can be further reduced, facilitating a light and thin design of the foldable electronic device in the third direction.

In a possible design, the magnet assembly further includes a second magnet, the second magnet is disposed on one of the first middle frame or the second middle frame, the first magnet is disposed on the other of the first middle frame or the second middle frame, and the first middle frame and the second middle frame are magnetically attached to each other via the first magnet and the second magnet. In this way, it is ensured that the foldable electronic device, when folded, has a good mechanical feel, and the first middle frame and the second middle frame can be stably connected after the foldable electronic device is folded, ensuring structural stability of the foldable electronic device.

It should be understood that the foregoing general descriptions and the following detailed descriptions are merely examples, and are not intended to limit this application.

### BRIEF DESCRIPTION OF DRAWINGS

FIG. 1 is a diagram of a structure of a foldable electronic device in an unfolded state in the conventional technology;
FIG. 2 is a diagram of a structure of a foldable electronic device in an unfolded state according to this application;
FIG. 3 is a diagram of a partial structure of the foldable electronic device in FIG. 2;
FIG. 4 is an exploded view of FIG. 3;
FIG. 5 is another exploded view of FIG. 3;
FIG. 6 is a top view of an electronic component and a first magnet that are mounted cooperatively in FIG. 3;
FIG. 7 is a cross-sectional view in a direction of A-A in FIG. 6;
FIG. 8 is a cross-sectional view in a direction of B-B in FIG. 6;
FIG. 9 is a cross-sectional view in a direction of C-C in FIG. 6;
FIG. 10 is a partially enlarged view at D in FIG. 7;
FIG. 11 is a top view of an upper cover in FIG. 5; and
FIG. 12 is a diagram of a structure of a recess in FIG. 11 in another embodiment.

### Reference numerals:

1': first middle frame;
2': second middle frame;
3': electronic component;
41': first magnet;
42': second magnet;
43': third magnet;
44': fourth magnet;
1: first middle frame;
   11: recess portion;
   12: sound output hole;
2: second middle frame;
3: electronic component;
   31: upper cover;
      311: recess;
      312: side wall;
      313: adhesive accommodating groove;
      314: bottom wall;
      315: gap;
      316: protrusion;
      317: sound output channel;
   32: core;
   33: lower cover;
      331: avoidance groove;
   34: front cavity;
   35: rear cavity;
4: magnet assembly;
   41: first magnet;
   42: second magnet;
   43: third magnet;
   44: fourth magnet;
5: rotating shaft;
X: first direction;
Y: second direction;
Z: third direction.

The accompanying drawings herein are incorporated into this specification and constitute a part of this specification, show embodiments in accordance with this application, and are used, together with this specification, to explain the principle of this application.

### DESCRIPTION OF EMBODIMENTS

To better understand technical solutions of this application, the following describes embodiments of this application in detail with reference to the accompanying drawings.

In descriptions of this application, unless otherwise specified and limited, the terms "first" and "second" are merely intended for a purpose of description, and cannot be understood as an indication or implication of relative importance. Unless otherwise specified or stated, the term "a plurality of" means two or more than two. The terms "connection", "fastening", and the like all should be understood in a broad sense. For example, the "connection" may be a fixed connection, or may be a detachable connection, an integrated connection, or an electrical connection; or may be a direct connection, or may be an indirect connection through an intermediate medium. A person of ordinary skill in the art may understand specific meanings of the foregoing terms in this application based on a specific case.

In a specific embodiment, the following further describes this application in detail with reference to specific embodiments and the accompanying drawings.

With the continuous development of electronic technologies, terminal devices such as mobile phones, notebook computers, and tablet computers have become increasingly integrated into people's life, and people are also increasingly accustomed to watching videos, checking current events, and enjoying movies, sports events, and the like on mobile phones and other terminal products. To obtain a larger display screen to improve viewing experience of users, foldable electronic devices gradually become popular.

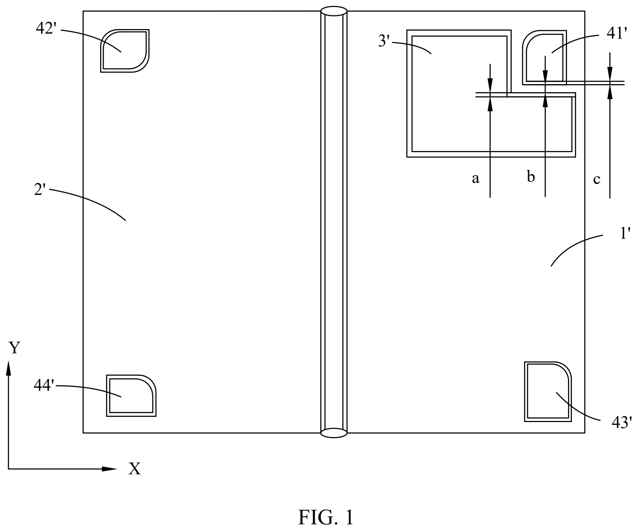

FIG. 1 is a diagram of a structure of a foldable electronic device in an unfolded state in the conventional technology. As shown in FIG. 1, an existing foldable electronic device usually includes a first middle frame 1' and a second middle frame 2' rotatable relative to each other, for the foldable electronic device to have a folded state and an unfolded state. When the foldable electronic device is folded, a specific force is required to maintain the folded state and a mechanical feel during folding. Usually, magnets are mounted on the first middle frame 1' and the second middle frame 2', for example, a first magnet 41' and a third magnet 43' are disposed on the first middle frame 1', and a second magnet 42' and a fourth magnet 44' are disposed on the second middle frame 2', so that the two middle frames can attract each other via the first magnet 41', the second magnet 42', the third magnet 43', and the fourth magnet 44' to ensure a secure connection and a mechanical feel of the foldable electronic device in the folded state.

However, the magnet usually has a large volume, and another electronic component 3' is further mounted on the first middle frame 1' or the second middle frame 2'. As shown in FIG. 1, the first magnet 41' and the electronic component 3' are disposed on the first middle frame 1', and there is specific space between the first magnet 41' and the electronic component 3'. The space includes a distance a of a gap of the first middle frame 1' at a spaced part between the electronic component 3' and the first middle frame 1', a thickness b of the first middle frame 1' at a spaced part between the first magnet 41' and the electronic component 3', and a gap c between the first magnet 41' and the first middle frame 1' at a spaced part. The space occupies much space in a first direction X and a second direction Y in the electronic device, and therefore is likely to affect the arrangement of other components in the foldable electronic device, reducing utilization of space inside the foldable electronic device.

To resolve the foregoing technical problem, embodiments of this application provide a foldable electronic device. The foldable electronic device includes any device with a foldable screen function, such as a mobile phone, a tablet computer, a personal digital assistant (personal digital assistant, PDA), a notebook computer, an on-board computer, a foldable display device, a foldable display, or a wearable device. A specific form of the foregoing electronic device is not particularly limited in embodiments of this application. For ease of description, the following uses an example in which the foldable electronic device is a foldable mobile phone for description. The following describes the electronic device in this application by using specific embodiments.

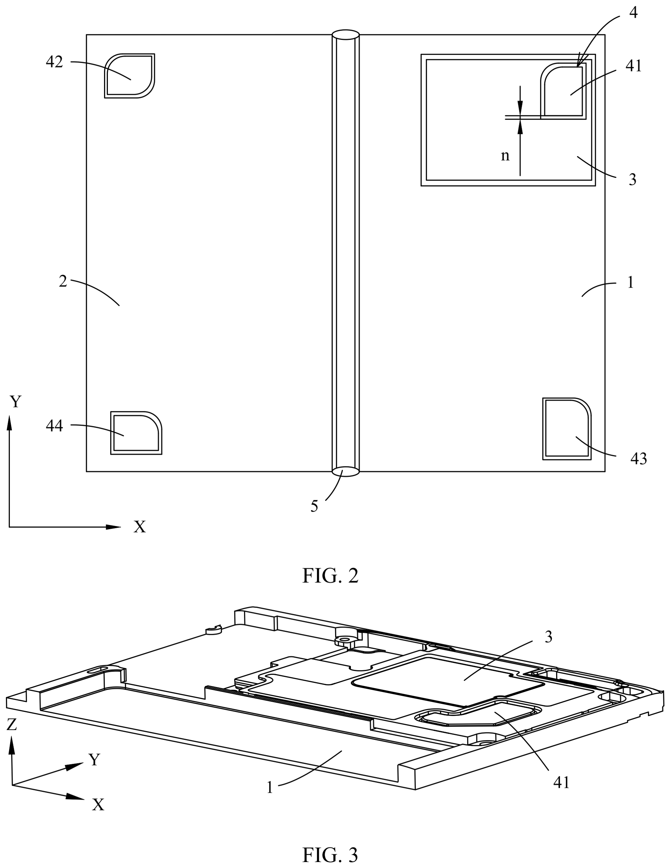

FIG. 2 is a diagram of a structure of a foldable electronic device in an unfolded state according to this application. As shown in FIG. 2, the foldable electronic device includes a first middle frame 1, a second middle frame 2, and a rotating shaft 5, and the first middle frame 1 and the second middle frame 2 are rotatably connected by the rotating shaft 5. When the first middle frame 1 and the second middle frame 2 rotate around the rotating shaft 5 and approach each other, the foldable electronic device can change from an unfolded state to a folded state, so that an overall size of the foldable electronic device is reduced, improving portability of the foldable electronic device carried by users.

Further, an electronic component 3 may be disposed on the first middle frame 1 or the second middle frame 2, for the foldable electronic device to have various functions and good performance. The electronic component 3 may be a speech recognition module, a camera module, an audio assembly, or the like. This is not limited herein. In an embodiment of this application, an example in which the electronic component 3 is an audio assembly is used for description. In addition, in a specific embodiment shown in FIG. 2, the electronic component 3 is disposed on the first middle frame 1.

Further, as shown in FIG. 2, the foldable electronic device further includes a magnet assembly 4. When the foldable electronic device is in a folded state, the first middle frame 1 and the second middle frame 2 are magnetically attached to each other via the magnet assembly 4 to ensure a secure connection and a mechanical feel in the folded state.

The magnet assembly 4 may include a plurality of magnets, and the plurality of magnets are correspondingly disposed on the first middle frame 1 and the second middle frame 2, to improve stability of magnetic attachment between the first middle frame 1 and the second middle frame 2. Certainly, the magnet assembly 4 may alternatively include some magnets and some block structures made of a material that can be attracted by the magnets. The block structure and the magnet are disposed at opposite positions respectively on the first middle frame 1 and the second middle frame, so that the first middle frame 1 and the second middle frame 2 can be magnetically attached to each other when the foldable electronic device is folded. After the foldable electronic device is folded, the first middle frame 1 and the second middle frame 2 can be stably connected. In addition, costs are lower. This is not limited herein.

For example, as shown in FIG. 2, the magnet assembly 4 includes a first magnet 41, a second magnet 42, a third magnet 43, and a fourth magnet 44. The first magnet 41 and the third magnet 43 are disposed on the first middle frame 1, and the second magnet 42 and the fourth magnet 44 are disposed on the second middle frame 2. The first magnet 41 and the second magnet 42 are opposite to each other and have opposite magnetic polarities, and the third magnet 43 and the fourth magnet 44 are opposite to each other and have opposite magnetic polarities. In this case, when the foldable electronic device is folded, the first magnet 41 and the second magnet 42 are magnetically attached to each other, and the third magnet and the fourth magnet are magnetically attached to each other. In this way, it is ensured that the foldable electronic device, when folded, has a good mechanical feel, and the first middle frame 1 and the second middle frame 2 can be stably connected after the foldable electronic device is folded, ensuring structural stability of the foldable electronic device.

Further, the first magnet 41, the second magnet 42, the third magnet 43, the fourth magnet 44, or another magnet of the magnet assembly 4 may be disposed on the electronic component 3 located on a same middle frame on which the magnet is located, to reduce a distance of a gap between the magnet and the electronic component 3, reduce space occupied by the magnet and the electronic component 3 in a first direction X and a second direction Y in the foldable electronic device, and improve utilization of space inside the foldable electronic device.

For example, as shown in FIG. 2, the electronic component 3 and the first magnet 41 in the magnet assembly 4 are both disposed on the first middle frame 1, where the electronic component 3 is connected to the first middle frame 1, and the first magnet 41 is connected to the electronic component 3.

Compared with the conventional technology where the first magnet 41 and the electronic component 3 are spaced apart on the first middle frame 1, in this embodiment, as shown in FIG. 2, the first magnet 41 is disposed on the electronic component 3. In space inside the foldable electronic device, there is only a distance n of a gap between the first magnet 41 and the electronic component 3, so that a thickness of the first middle frame 1 at a spaced part between the first magnet 41 and the electronic component 3 can be omitted, and a distance of a gap between the electronic component 3 and the first middle frame 1 at the spaced part and a distance of a gap between the first magnet 41 and the first middle frame 1 at the spaced part can be further omitted, reducing space occupied by the first magnet 41 and the electronic component 3 in a first direction X and a second direction Y in the foldable electronic device, and improving utilization of space inside the foldable electronic device, for the first magnet 41 or the electronic component 3 to have more mounting space in the first direction X and the second direction Y. In this way, a volume of the first magnet 41 or the electronic component 3 can be designed to be larger, to improve performance of the first magnet 41 or the electronic component 3, improving user experience.

As shown in FIG. 2, if an original overall volume of the electronic component 3 remains unchanged, and a volume of the first magnet 41 is designed to be larger in the first direction X and the second direction Y, the first magnet 41 has a larger area in the first direction X and the second direction Y, and has better magnetism. This is more conducive for the first magnet 41 and the second magnet 42 disposed on the second middle frame 2 to be magnetically attached to each other, thereby improving a mechanical feel of the foldable electronic device in an unfolded or folded state, and further allowing for a secure connection of the foldable electronic device in the folded state, improving user experience.

As shown in FIG. 2, if an original volume of the first magnet 41 remains unchanged, and a volume of the electronic component 3 is designed to be larger, where an example in which the electronic component 3 is an audio assembly is used, the electronic component 3 used as the audio assembly can have a larger rear cavity, or can implement mounting of a core with a larger volume, thereby further improving sound output effect of the audio assembly, improving audio performance of the foldable electronic device, and improving user experience.

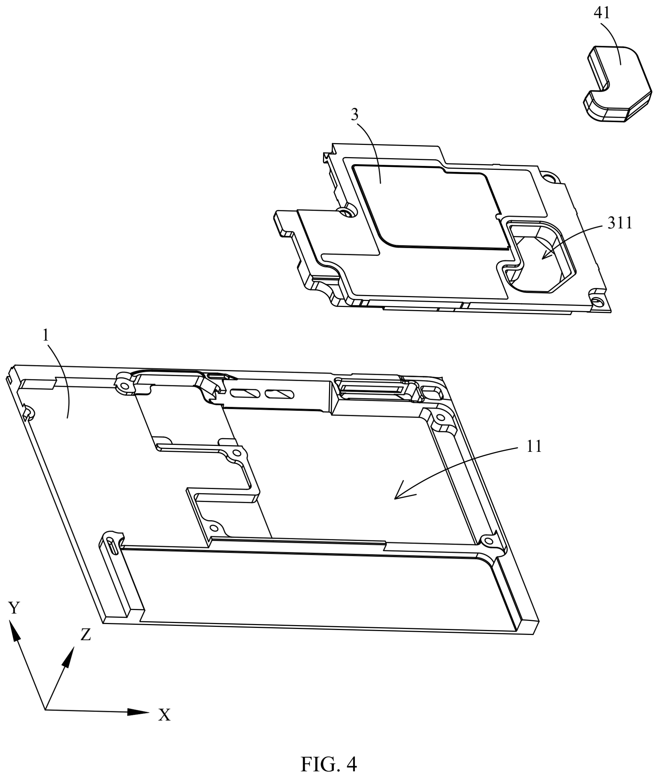

Further, refer to FIG. 3 and FIG. 4. FIG. 3 is a diagram of a partial structure of the foldable electronic device in FIG. 2. FIG. 4 is an exploded view of FIG. 3. As shown in FIG. 4, the first middle frame 1 is provided with a hollowed-out recess portion 11, the electronic component 3 is at least partially located in the recess portion 11, a recess 311 is provided on a side that is of the electronic component 3 and that faces the first magnet 41, and the first magnet 41 is disposed in the recess 311.

In this embodiment, as shown in FIG. 4, based on this structure, space for stacking the electronic component 3, the first middle frame 1, and the first magnet 41 in a third direction Z can be reduced, and a thickness of the foldable electronic device in the third direction Z can be reduced, facilitating a light and thin design of the foldable electronic device in the third direction Z. In addition, the recess 311 can limit the magnet 41 in the first direction X and the second direction Y, and prevent the first magnet 41 from moving in this plane, improving effect of fastening the first magnet 41 in the recess 311, and improving structural stability of the foldable electronic device.

As shown in FIG. 2, for fastening the second magnet 42, the third magnet 43, and the fourth magnet 44 that are in the magnet assembly 4 and that are mounted on the first middle frame 1 and the second middle frame 2, and reducing a thickness of the foldable electronic device in the third direction, corresponding recesses may be provided on the first middle frame 1 and the second middle frame 2, for the second magnet 42, the third magnet 43, and the fourth magnet 44 to be located in the recesses.

For example, as shown in FIG. 2, in the magnet assembly 4, the first magnet 41, the second magnet 42, the third magnet 43, and the fourth magnet 44 are all roughly rectangular with some rounded corners. The magnet has a simple structure, facilitating processing and formation, and also helping provide corresponding recesses on the first middle frame 1, the second middle frame 2, and the electronic component 3, thereby reducing preparation costs.

For example, as shown in FIG. 4, the first magnet 41 may alternatively be roughly L-shaped, and a shape of the recess 311 on the electronic component 3 matches the shape of the first magnet 41, so that limiting effect on the first magnet 41 can be further improved, and the first magnet 41 can be prevented from rotating in the recess 311, further improving effect of fastening the first magnet 41 in the recess 311, and improving structural stability of the foldable electronic device.

Certainly, the shape of each magnet (such as the first magnet 41, the second magnet 42, the third magnet 43, and the fourth magnet 44) of the magnet assembly 4 may alternatively be a parallelogram, a trapezoid, a triangle, a circle, an ellipse, a T shape, or another irregular shape, the shapes of the magnets may be the same or may be different, and a shape of a recess corresponding to each magnet matches a shape of the magnet disposed inside the recess, to improve design flexibility of the foldable electronic device. This is not limited herein.

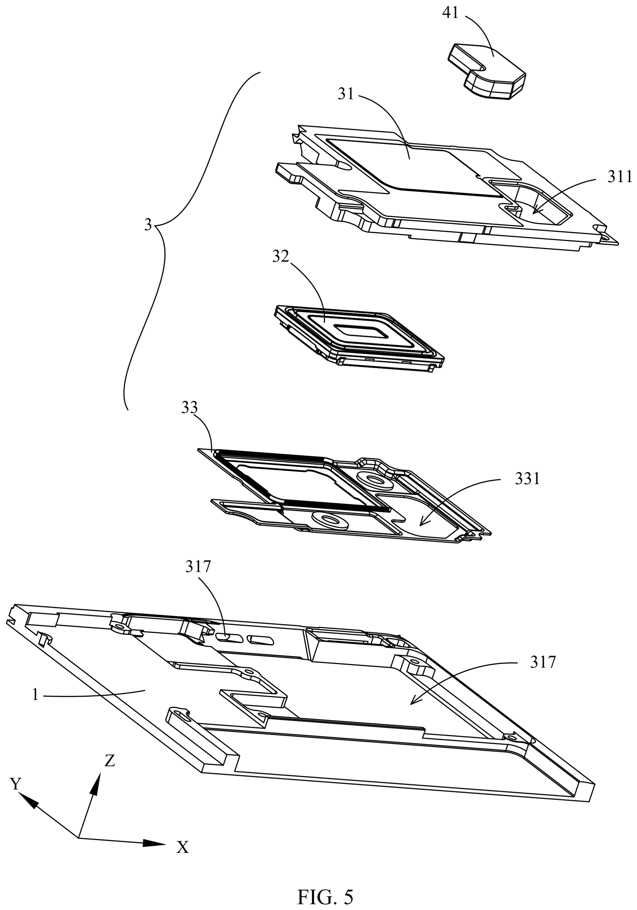

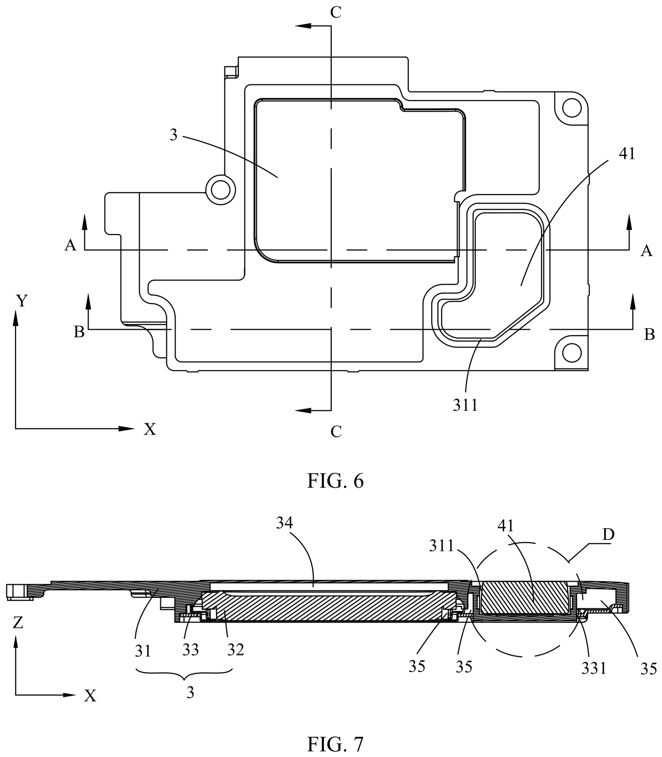

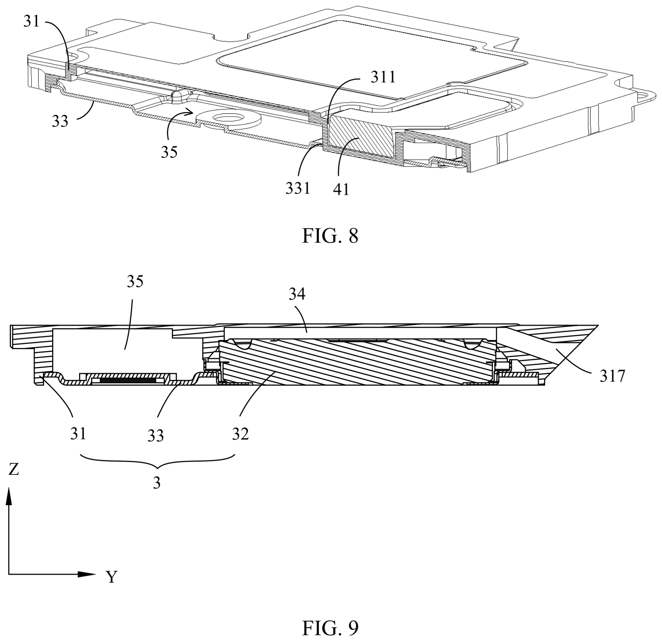

Further, an example in which the electronic component 3 is an audio assembly is used. Refer to FIG. 5 to FIG. 9. FIG. 5 is another exploded view of FIG. 3. FIG. 6 is a top view of a partial structure in FIG. 3. FIG. 7 is a cross-sectional view in a direction of A-A in FIG. 6. FIG. 8 is a cross-sectional view in a direction of B-B in FIG. 6. FIG. 9 is a cross-sectional view in a direction of C-C in FIG. 6.

As shown in FIG. 5, the electronic component 3 used as the audio assembly includes an upper cover 31, a core 32, and a lower cover 33, the upper cover 31 is connected to the lower cover 33, and the core 32 is disposed between the upper cover 31 and the lower cover 33.

As shown in FIG. 7, the electronic component 3 further includes a sound cavity enclosed by the upper cover 31 and the lower cover 33, and the core 32 divides the sound cavity into a front cavity 34 and a rear cavity 35. Specifically, the front cavity 34 is enclosed by the core 32 and the upper cover 31, and the rear cavity 35 is enclosed by the core 32, the lower cover 33, and the upper cover 31. As shown in FIG. 7 and FIG. 8, at least a part of the upper cover 31 is recessed toward the rear cavity 35 to form the recess 311.

In this embodiment, as shown in FIG. 8, at least a part of the upper cover 31 is recessed toward the rear cavity 35 to form the recess 311, so that a thickness of the foldable electronic device in the third direction Z can be reduced, facilitating a light and thin design of the foldable electronic device in the third direction Z. In addition, if an original volume of the first magnet 41 remains unchanged, and a volume of the electronic component 3 may be designed to be larger, the electronic component 3 used as the audio assembly can have a larger rear cavity 35, so that bass effect of the electronic component 3 can be improved, and audio performance of the foldable electronic device can be improved, improving user experience.

Further, as shown in FIG. 5, FIG. 7, and FIG. 8, the lower cover 33 is provided with an avoidance groove 331, and at least a part that is of the upper cover 31 and that is recessed toward the rear cavity 35 is located in the avoidance groove 331, so that a depth of the recess 311 in the third direction Z can be ensured, to improve limiting effect of the recess 311 on the first magnet 41 inside the recess 311, and space for stacking the first magnet 41, the upper cover 31, and the lower cover 33 in the third direction Z can be further reduced, and therefore a thickness of the foldable electronic device in the third direction Z can be further reduced, facilitating a light and thin design of the foldable electronic device in the third direction Z.

Further, as shown in FIG. 9, a sound output channel 317 in communication with the front cavity 34 is provided on a side of the upper cover 31, and the sound output channel 317 is in communication with a sound output hole 12 provided on the first middle frame 1 in FIG. 5, so that the front cavity 34 of the electronic component 3 can be in communication with the outside sequentially through the sound output channel 317 and the sound output hole 12, to ensure sound output effect of the electronic component 3.

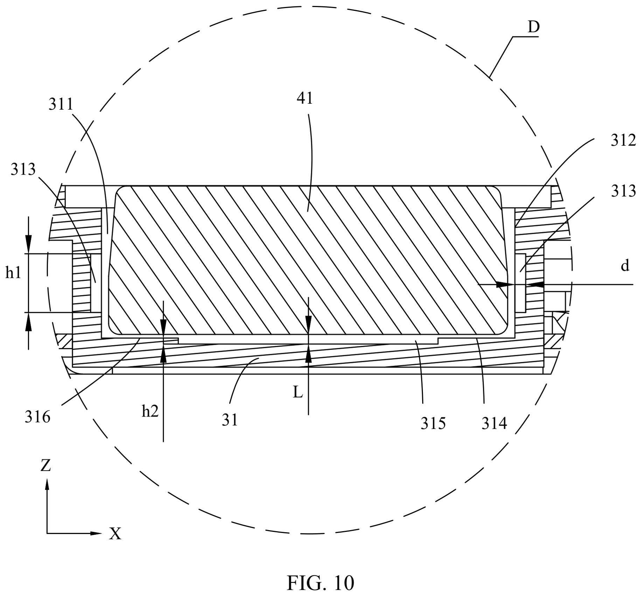

Further, FIG. 10 is a partially enlarged view at D in FIG. 7. As shown in FIG. 10, an adhesive accommodating groove 313 is recessed into a side wall 312 of the recess 311, and the adhesive accommodating groove 313 is provided to accommodate an adhesive.

In this embodiment, as shown in FIG. 10, by dispensing an adhesive in the adhesive accommodating groove 313, the first magnet 41 located in the recess 311 can be bonded to the side wall 312 of the recess 311, improving tolerance for errors of the first magnet 41 in the recess 311, so that a first magnet 41 of a small volume can still be securely fastened in the recess 311, further improving effect of fastening the first magnet 41 in the recess 311, so that first magnets 41 of different sizes can be stably located in the first recess 311, further improving structural stability of the foldable electronic device.

Further, as shown in FIG. 10, a depth of the adhesive accommodating groove 313 is d, and meets 0.14 mm ≤ d ≤ 0.16 mm. For example, d may be 0.14 mm, 0.15 mm, 0.16 mm, or the like, and may be specifically designed based on an actual requirement. This is not limited herein.

As shown in FIG. 10, the depth d of the adhesive accommodating groove 313 can neither be excessively large nor excessively small. If the depth d of the adhesive accommodating groove 313 is excessively large, for example, d > 0.16 mm, an excessive amount of adhesive is required for filling the adhesive accommodating groove 313, and excessive adhesive dispensing is likely to cause adhesive overflowing, potentially leading to a material waste. In addition, when the adhesive is dispensed into the adhesive accommodating groove 313, the adhesive accommodating groove 313 is hardly filled up, reducing effect of bonding the first magnet 41 into the recess 311. Moreover, an excessively deep adhesive accommodating groove 313 is hardly formed, and has a high process requirement, resulting in high manufacturing costs. If the depth d of the adhesive accommodating groove 313 is excessively small, for example, d < 0.14 mm, an amount of adhesive that can be accommodated in the adhesive accommodating groove 313 is small, reducing effect of bonding between the first magnet 41 and the side wall 312 of the recess 311, making the first magnet 41 prone to detachment.

In this embodiment, as shown in FIG. 10, when the depth d of the adhesive accommodating groove 313 meets 0.14 mm ≤ d ≤ 0.16 mm, the adhesive accommodating groove 313 has a moderate depth, and can accommodate a sufficient volume of adhesive, so that the first magnet 41 can be securely connected to the side wall 312 of the recess 311 without detachment, improving effect of fastening the first magnet 41 in the recess 311, and improving structural stability of the foldable electronic device. In addition, it is easy to process the adhesive accommodating groove 313 with this depth, with a low process requirement and no waste of an adhesive material, so that the adhesive accommodating groove 313 can be easily filled up with the dispensed adhesive, reducing manufacturing costs.

In an embodiment of this application, the depth d of the adhesive accommodating groove 313 is 0.15 mm. During adhesive dispensing, the adhesive accommodating groove 313 is easily filled up with an adhesive, improving effect of bonding the first magnet 41 into the recess 311.

Further, as shown in FIG. 10, in a third direction Z of the foldable electronic device, a height of the adhesive accommodating groove 313 is h1, and meets 0.6 mm ≤ h1 ≤ 0.8 mm. For example, h1 may be 0.6 mm, 0.7 mm, 0.8 mm, or the like, and may be specifically designed based on an actual requirement. This is not limited herein.

As shown in FIG. 10, if h1 is excessively large, for example, h1 > 0.8 mm, a volume of the adhesive accommodating groove 313 is excessively large, an excessive amount of adhesive is required for filling the adhesive accommodating groove 313, and it is likely to cause adhesive overflowing, potentially leading to a material waste. If h1 is excessively small, for example, h1 < 0.6 mm, the adhesive accommodating groove 313 has an excessively small volume and accommodates a small amount of adhesive, reducing effect of bonding between the first magnet 41 and the side wall 312 of the recess 311, reducing effect of fastening the first magnet 41 in the recess 311, and making the first magnet 41 prone to detachment.

In this embodiment, as shown in FIG. 10, as shown in FIG. 10, when the height h1 of the adhesive accommodating groove meets 0.6 mm ≤ h1 ≤ 0.8 mm, it can be ensured that the adhesive accommodating groove 313 has a moderate volume, and can accommodate a sufficient volume of adhesive, thereby ensuring effect of bonding between the first magnet 41 and the side wall 312 of the recess 311, so that the first magnet 41 hardly detaches from the recess 311, improving structural stability of the foldable electronic device. It is also easy to process the adhesive accommodating groove 313 with this depth, with a low process requirement and no adhesive overflowing, saving a material, and reducing manufacturing costs.

Further, as shown in FIG. 10, there is a gap 315 between a bottom wall 314 of the recess 311 and the first magnet 41, and the gap 315 is also provided to accommodate an adhesive.

In this embodiment, as shown in FIG. 10, by dispensing an adhesive in the gap 315, the first magnet 41 located in the recess 311 can be bonded to the bottom wall 314 of the recess 311, further improving effect of fastening the first magnet 41 in the recess 311, and further improving structural stability of the foldable electronic device.

Further, as shown in FIG. 10, in a third direction Z of the foldable electronic device, a distance of the gap 315 is L, and meets 0.1 mm ≤ L ≤ 0.15 mm. For example, L may be 0.1 mm, 0.12 mm, 0.15 mm, or the like, and may be specifically designed based on an actual requirement. This is not limited herein.

As shown in FIG. 10, if the distance L of the gap is excessively small, for example, L < 0.1 mm, an adhesive between the first magnet 41 and the bottom wall 314 of the recess 311 is excessively thin, potentially leading to low bonding strength between the first magnet 41 and the bottom wall 314, so that the first magnet 41 is likely to detach from the recess 311. If the distance L of the gap is excessively large, for example, L > 0.15 mm, the adhesive is excessively thick, increasing space for stacking the first magnet 41 and the upper cover 31 in the third direction Z. This is not conducive to a light and thin design of the foldable electronic device, and causes a waste of an adhesive material, increasing manufacturing costs.

In this embodiment, as shown in FIG. 10, when the distance L of the gap 315 meets 0.1 mm ≤ L ≤ 0.15 mm, there is an adhesive layer with a moderate thickness between the first magnet 41 and the bottom wall 314 of the recess 311, so that bonding strength between the first magnet 41 and the bottom wall 314 can be improved, and effect of bonding the first magnet 41 into the recess 311 can be improved. In this way, the first magnet 41 hardly detaches from the recess 311, improving structural stability of the foldable electronic device, meeting a requirement for a lighter and thinner design of the foldable electronic device, and resulting in low costs.

In an embodiment of this application, the distance L of the gap 315 is 0.1 mm, so that an adhesive material can be saved to a maximum extent, and effect of bonding between the first magnet 41 and the bottom wall 314 of the recess 311 can be ensured, making the foldable electronic device lighter and thinner.

It needs to be noted that, as shown in FIG. 10, the gap 315 and the adhesive accommodating groove 313 may be both provided in a same recess 311, and the gap 315 and the adhesive accommodating groove 313 cooperatively accommodate an adhesive, so that the first magnet 41 can be bonded to both the side wall 312 and the bottom wall 314 of the recess 311, further improving effect of fastening the first magnet 41 in the recess 311. Certainly, there may be only one of the gap 315 and the adhesive accommodating groove 313 provided in the recess 311. This is not limited herein.

Further, as shown in FIG. 10, a protrusion 316 is provided in the recess 311; and in a third direction Z of the foldable electronic device, the protrusion 316 protrudes from the bottom wall 314.

In this embodiment, as shown in FIG. 10, the protrusion 316 protrudes from the bottom wall 314 of the recess 311, so that movement of the first magnet 41 can be limited in the third direction Z, thereby ensuring that there is a sufficient gap 315 between the first magnet 41 and the lowest point of the bottom wall 314 in the third direction Z, and then ensuring a sufficient thickness of an adhesive layer, to ensure bonding strength between the first magnet 41 and the bottom wall 314, improving effect of fastening the first magnet 41 in the recess 311.

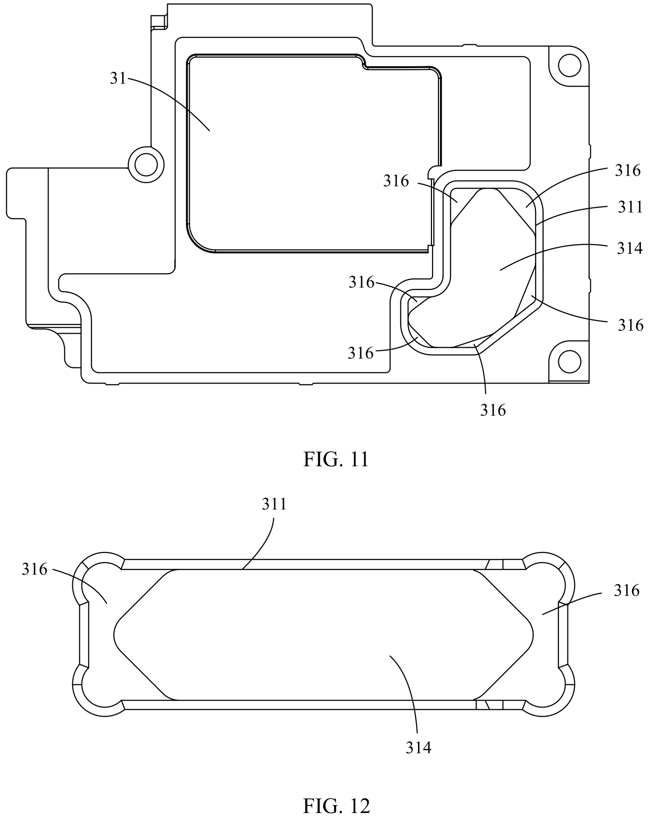

Further, refer to FIG. 11 and FIG. 12. FIG. 11 is a top view of an upper cover in FIG. 5. FIG. 12 is a diagram of a structure of a recess in FIG. 11 in another embodiment. As shown in FIG. 11 and FIG. 12, the protrusion 316 protrudes at a corner of the bottom wall 314. In this way, it can be ensured that there is a sufficient distance L of a gap between the first magnet 41 and a middle part of the bottom wall 314 in the third direction Z, ensuring a thickness of an adhesive layer, increasing a bonding area between the first magnet 41 and the bottom wall 314, further improving bonding strength between the first magnet 41 and the bottom wall 314, and further improving effect of fastening the first magnet 41 in the recess 311.

In a specific embodiment shown in FIG. 11, the recess 311 is in an irregular and rough L shape, and the protrusions 316 may be provided at all corners of the recess 311 in the figure, or certainly, may be provided at some corners, to further reduce preparation difficulty and save preparation costs. This is not limited herein.

In a specific embodiment shown in FIG. 12, the recess 311 is in a rectangular shape, the protrusions 316 may be provided at four corners, and some protrusions may be connected, to improve limiting effect on the first magnet 41 in the third direction Z, and ensure a sufficient distance of the gap between the first magnet 41 and the middle part of the bottom wall 314.

Certainly, the protrusion 316 may alternatively protrude evenly from an edge of the bottom wall 314, to further improve limiting effect on the first magnet 41 in the third direction Z. This is not limited herein.

Further, as shown in FIG. 10, in the third direction Z of the foldable electronic device, a height of the protrusion 316 is h2, and 0.05 mm ≤ h2 ≤ 0.08 mm. For example, h2 may be 0.05 mm, 0.06 mm, 0.07 mm, 0.08 mm, or the like, and may be specifically set based on an actual requirement. This is not limited herein.

As shown in FIG. 10, if the height h2 is small, for example, h2 < 0.05 mm, limiting effect on the first magnet 41 in the third direction Z is poor, so that a sufficient distance L of the gap between the first magnet 41 and the bottom wall 314 cannot be ensured. If the height h2 is large, for example, h2 is greater than 0.08 mm, a distance L of the gap between the first magnet 41 and the bottom wall 314 is excessively large, causing a waste of an applied adhesive, and increasing a thickness of the foldable electronic device in the third direction Z. This is not conducive to a requirement for a lighter and thinner design of the entire foldable electronic device.

In this embodiment, as shown in FIG. 10, when the height h2 of the protrusion 316 meets 0.05 mm ≤ h2 ≤ 0.08 mm, it can be ensured that the distance L of the gap between the first magnet 41 and the bottom wall 314 is sufficient, thereby ensuring a sufficient thickness of an adhesive layer, to ensure bonding strength between the first magnet 41 and the bottom wall 314 and improve effect of fastening the first magnet 41 in the recess 311, with no waste of an applied adhesive. This is also conducive to a requirement for a lighter and thinner design of the entire foldable electronic device.

In an embodiment of this application, the height h2 of the protrusion 316 is 0.05 mm, so that a sufficient distance L of the gap between the first magnet 41 and the bottom wall 314 can be ensured, and the foldable electronic device can be lighter and thinner.

The foregoing descriptions are only specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A foldable electronic device, comprising:
a first middle frame;
a second middle frame, wherein the second middle frame is rotatably connected to the first middle frame;
an electronic component, wherein the electronic component is disposed on the first middle frame or the second middle frame; and
a magnet assembly, wherein the first middle frame and the second middle frame are magnetically attached to each other via the magnet assembly, the magnet assembly comprises a first magnet, and the first magnet is disposed on the electronic component.

2. The foldable electronic device according to claim 1, wherein the electronic component is provided with a recess, and the first magnet is disposed in the recess.

3. The foldable electronic device according to claim 2, wherein the recess comprises a side wall, and an adhesive accommodating groove is recessed into the side wall.

4. The foldable electronic device according to claim 3, wherein a depth of the adhesive accommodating groove is d, and 0.14 mm ≤ d ≤ 0.16 mm.

5. The foldable electronic device according to claim 3, wherein in a third direction of the foldable electronic device, a height of the adhesive accommodating groove is h1, and 0.6 mm ≤ h1 ≤ 0.8 mm.

6. The foldable electronic device according to claim 2, wherein the recess further comprises a bottom wall, and there is a gap between the bottom wall and the first magnet.

7. The foldable electronic device according to claim 6, wherein in a third direction of the foldable electronic device, a distance of the gap is L, and 0.1 mm ≤ L ≤ 0.15 mm.

8. The foldable electronic device according to claim 6, wherein a protrusion is provided in the recess; and
in a third direction of the foldable electronic device, the protrusion protrudes from the bottom wall.

9. The foldable electronic device according to claim 8, wherein the protrusion protrudes at a corner of the bottom wall.

10. The foldable electronic device according to claim 8, wherein in the third direction of the foldable electronic device, a height of the protrusion is h2, and 0.05 mm ≤ h2 ≤ 0.08 mm.

11. The foldable electronic device according to any one of claims 2 to 10, wherein the electronic component is an audio assembly, the audio assembly comprises an upper cover, a core, and a lower cover, the core and the upper cover enclose a front cavity, and the core, the lower cover, and the upper cover enclose a rear cavity; and
at least a part of the upper cover is recessed toward the rear cavity to form the recess.

12. The foldable electronic device according to claim 11, wherein the lower cover is provided with an avoidance groove, and at least a part that is of the upper cover and that is recessed toward the rear cavity is located in the avoidance groove.

13. The foldable electronic device according to any one of claims 1 to 10, wherein the magnet assembly further comprises a second magnet;
the second magnet is disposed on one of the first middle frame or the second middle frame, and the first magnet is disposed on the other of the first middle frame or the second middle frame; and
the first middle frame and the second middle frame are magnetically attached to each other via the first magnet and the second magnet.
